(19) Europäisches Patentamt
European Patent Office
Office européen des brevets

(11) **EP 3 385 933 A1**

(12) **EUROPEAN PATENT APPLICATION**

(43) Date of publication:
**10.10.2018 Bulletin 2018/41**

(51) Int Cl.:
**G08G 1/14** (2006.01)   **G08G 1/04** (2006.01)
**G07B 15/06** (2011.01)

(21) Application number: **18165499.7**

(22) Date of filing: **03.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.04.2017   JP 2017074330**

(71) Applicant: **Toyota Jidosha Kabushiki Kaisha Aichi-Ken 471-8571 (JP)**

(72) Inventor: **KOREISHI, Jun Aichi-ken, 471-8571 (JP)**

(74) Representative: **J A Kemp 14 South Square Gray's Inn London WC1R 5JJ (GB)**

(54) **PARKING LOT, PARKING LOT MANAGEMENT SYSTEM, AND PARKING LOT MANAGEMENT METHOD**

(57)   A parking lot includes: a parking spot; and an identification code that corresponds to the parking spot, wherein the identification code is installed to exist within a predetermined range, the predetermined range being such a range that, when a camera captures an image of the identification code, the image captured by the camera can include an image of a license plate of a vehicle parked in the parking spot, and the predetermined range being a range where the camera can capture the image in such size that a vehicle registration number and the identification code are identifiable based on the image captured by the camera.

FIG. 1

EP 3 385 933 A1

**Description**

BACKGROUND OF THE INVENTION

1. Field of the Invention

The invention relates to a parking lot, a parking lot management system, and a parking lot management method.

2. Description of Related Art

A parking lot management system has been disclosed in Japanese Patent Application Publication No. 2004-234429 (JP 2004-234429 A) and Japanese Patent Application Publication No. 2010-108240 (JP 2010-108240 A) described below. The parking lot management system disclosed in JP 2004-234429 A reads a vehicle registration number of a vehicle, a driver of which uses a parking lot, and registers the vehicle registration number in a database, so as to manage the number of illicit parking and the like per vehicle registration number. In addition, when the vehicle attempts to enter the parking lot, the parking lot management system disclosed in JP 2004-234429 A denies entry of the vehicle or the like in accordance with the number of the illicit parking that corresponds to the vehicle registration number read from the vehicle.

The parking lot management system disclosed in JP 2010-108240 A uses a camera that is installed in each parking space of a parking lot to capture an image of a vehicle that has entered the parking space. Then, the parking lot management system specifies a vehicle registration number from the captured image, and stores the specified vehicle registration number in connection with unique information of the parking space, so as to manage which vehicle exists in which parking space.

SUMMARY OF THE INVENTION

In JP 2004-234429 A, as a component of the parking lot management system, image input means is required in the parking lot, and an example of the image input means is a camera that can capture an image of the vehicle and the like. For this reason, installation cost and operational cost of the parking lot management system in the parking lot are high. Thus, it is unrealistic to install the parking lot management system as a measure against unauthorized parking in a peer-to-peer shared parking space for which a personal garage, a monthly parking lot, or the like is used.

Meanwhile, the following method is also considered. In the case where a user who has registered in a parking lot reservation service finds an unauthorized parked vehicle when attempting to park in a reserved parking lot or spot, the user uses a smartphone camera or an in-vehicle camera to capture an image of the vehicle and the vehicle registration number, and reports a fact of unauthorized parking to a center. Then, the system recognizes the vehicle registration number of the unauthorized parked vehicle. However, in such a method, data providing evidence that the unauthorized parked vehicle is parked in a predetermined parking spot is essential.

The parking lot or the parking spot is often only provided with the number of the parking spot on a paved surface, and an image of the number of the parking spot is insufficient to uniquely identify the particular parking spot. It is also considered to tag a location of the parking lot by using GPS information provided by the smartphone or the vehicle. However, positioning accuracy of a current GPS system may lead to a positioning error of up to several tens of meters, and the current GPS system disallows indoor positioning. Thus, the above system and method are insufficient from a perspective of the unique identification of the parking spot.

Meanwhile, the parking lot management system disclosed in JP 2010-108240 A manages the vehicle registration number of the parked vehicle in connection with the unique information of the parking space where the vehicle is parked. However, the information that is only managed by connection lacks objectivity as evidence that is later used to prove a fact of the illicit parking. Thus, the parking lot management system has to be improved.

In view of the above, the invention provides a parking lot, a parking lot management system, and a parking lot management method capable of easily acquiring objective evidence of illicit parking.

A parking lot according to a first aspect of the invention includes: a parking spot; and an identification code that corresponds to the parking spot, wherein the identification code is installed to exist within a predetermined range, the predetermined range being such a range that, when a camera captures an image of the identification code, the image captured by the camera can include an image of a license plate of a vehicle parked in the parking spot, and the predetermined range being a range where the camera can capture the image in such size that a vehicle registration number and the identification code are identifiable based on the image captured by the camera.

A parking lot management system according to a second aspect of the invention includes: an identification code corresponding to a parking spot; and a specification section configured to specify a vehicle registration number of the vehicle and the parking spot where the vehicle is parked based on an image, the image including a license plate of the vehicle and the identification code, the vehicle being parked in the parking spot.

In the above aspect, the identification code may installed to exist within a predetermined range, the predetermined range being such a range that, when a camera captures an image of the identification code, the image captured by the camera can include an image of the license plate of the vehicle, and the predetermined range being a range where the camera can capture the image in such size that the vehicle registration number and the identification code are identifiable based on the image captured by the camera.

In the above aspect, the parking lot management system may further include a storage section configured to store the vehicle registration number in association with the parking spot.

In the above aspect, the parking lot management system may further include: a storage section configured to store vehicle registration number information including the vehicle registration number; and a determination section configured to refer the vehicle registration number information stored in the storage section and determine whether the vehicle is parked illicitly based on the vehicle registration number and the parking spot.

In the above aspect, the parking lot management system may further include a camera configured to capture the image.

In the above aspect, the parking lot management system may further include a reception section configured to receive the image captured by a camera.

In the above aspect, the parking lot management system may further include: a camera configured to capture the image; and a storage section configured to store the vehicle registration number in association with the parking spot, wherein the identification code is installed to exist within a predetermined range, the predetermined range being such a range that, when the camera captures an image of the identification code, the image captured by the camera can include an image of the license plate of the vehicle parked in the parking spot, and the predetermined range being a range where the camera can capture the image in such size that the vehicle registration number and the identification code are identifiable based on the image captured by the camera.

In the above aspect, the parking lot management system may further include a reception section configured to receive the image captured by a camera; and a storage section configured to store the vehicle registration number in association with the parking spot, wherein the identification code is installed to exist within a predetermined range, the predetermined range being such a range that, when the camera captures an image of the identification code, the image captured by the camera can include an image of the license plate of the vehicle parked in the parking spot, and the predetermined range being a range where the camera can capture the image in such size that the vehicle registration number and the identification code are identifiable based on the image captured by the camera.

In the above aspect, the parking lot management system may further include: a camera configured to capture the image; a storage section configured to store vehicle registration number information including the vehicle registration number; and a determination section configured to refer to the vehicle registration number information stored in the storage section and determine whether the vehicle is parked illicitly based on the vehicle registration number and the parking spot, wherein the identification code is installed to exist within a predetermined range, the predetermined range being such a range that, when the camera captures an image of the identification code, the image captured by the camera can include an image of the license plate of the vehicle parked in the parking spot, and the predetermined range being a range where the camera can capture the image in such size that the vehicle registration number and the identification code are identifiable based on the image captured by the camera.

In the above aspect, the parking lot management system may further include: a reception section configured to receive the image captured by a camera; a storage section configured to store vehicle registration number information including the vehicle registration number; and a determination section configured to refer to the vehicle registration number information stored in the storage section and determines whether the vehicle is parked illicitly based on the vehicle registration number and the parking spot, wherein the identification code is installed to exist within a predetermined range, the predetermined range being such a range that, when the camera captures an image of the identification code, the image captured by the camera can include an image of the license plate of the vehicle parked in the parking spot, and the predetermined range being a range where the camera can capture the image in such size that the vehicle registration number and the identification code are identifiable based on the image captured by the camera.

A parking lot management method according to a sixth aspect of the invention is performed in a parking lot management system. The parking lot management method includes: specifying a vehicle registration number and a parking spot based on an image captured by the camera, the image including the identification code and a license plate; and storing the vehicle registration number and the parking spot in association with each other, wherein the identification code is installed to exist within a predetermined range, the predetermined range being such a range that, when the camera captures an image of the identification code, the image captured by the camera can include an image of the license plate of the vehicle parked in the parking spot, and the predetermined range being a range where the camera can capture the image in such size that the vehicle registration number and the identification code are identifiable based on the image captured by the camera..

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view of an exemplary schematic configuration of a parking lot management system according to an embodiment;
FIG. 2 is a diagram of an exemplary functional configuration of a management device shown in FIG. 1;
FIG. 3 is a flowchart illustrating an example of a procedure to determine illicit parking;
FIG. 4 is a flowchart illustrating the example of the procedure to determine the illicit parking;
FIG. 5 is a flowchart illustrating another example of the procedure to determine the illicit parking;
FIG. 6 is a view illustrating coordinate systems that are used in the parking lot management system shown in FIG. 1; and
FIG. 7 is a view illustrating an acquisition method of an image in which a parking spot is seen from the front.

DETAILED DESCRIPTION OF EMBODIMENTS

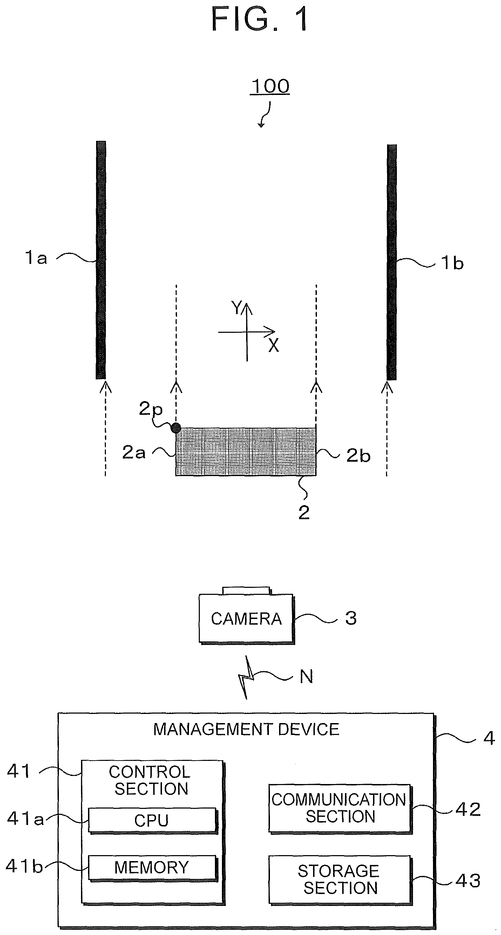

A description will be made on an embodiment of the invention with reference to the accompanying drawings. Note that members denoted by the same reference numerals have the same or similar configurations in the drawings.
Referring to FIG. 1, a configuration of a parking lot management system according to the embodiment will be described. A parking lot management system 100 is a computer system that manages parking of a vehicle in a parking lot. The parking lot management system 100 includes a two-dimensional code 2, a camera 3, and a management device 4, for example. The numerals 1a, 1b denote boundary lines that define each parking spot in the parking lot. In FIG. 1, one vehicle is parked between the boundary line 1a and the boundary line 1b. The two-dimensional code 2 is arranged such that the two-dimensional code 2 is located in front of the vehicle when the vehicle is parked.
The two-dimensional code 2 is an identification code that is set in a corresponding manner to each of the parking spots in the parking lot. In the two-dimensional code 2, information that identifies the parking spot where the two-dimensional code 2 is installed is encoded. As the information that identifies the parking spot, location information of the parking spot can be used, for example.
In this embodiment, a description will be made by using a colored barcode as the two-dimensional code 2. Examples of the colored barcode are a Chameleon Code (registered trademark), a SmartIcon (registered trademark), and a Colorbit (registered trademark). Note that the code applicable in the invention is not limited to the colored barcode. Any type of code such as another two-dimensional code, a one-dimensional code, or a three-dimensional code can be adopted as long as the code is the identification code that corresponds to the parking spot.
The two-dimensional code 2 is installed to exist within a predetermined range from a license plate of the vehicle when the vehicle is parked in the parking spot. The predetermined range is such a range that, when the camera 3 captures an image of the two-dimensional code 2 in the state where the vehicle is parked in the parking spot, the captured image includes an image of the license plate and is a range where the camera 3 can capture the image in such size that a vehicle registration number and the two-dimensional code 2 are identifiable on the basis of the captured image.
Referring to FIG. 1, an installment example of the two-dimensional code 2 will specifically be described. Per parking spot, the two-dimensional code 2 is installed to locate in front of the parked vehicle. With an image capturing direction of the camera 3 being a reference, the two-dimensional code 2 is installed at a position where the two-dimensional code 2 is not partially or entirely hidden by the vehicle when the vehicle is parked. In addition, the two-dimensional code 2 is installed such that a reference point 2p is located on the parking spot side, and the reference point 2p serves as a reference when the two-dimensional code 2 is read. Furthermore, the two-dimensional code 2 is installed such that a center line of the two-dimensional code 2 in a longitudinal direction matches a center between the boundary lines 1a, 1b of the parking spot and that two short sides 2a, 2b of a rectangle defining the two-dimensional code 2 are parallel with the boundary lines 1a, 1b of the parking spot.
When the two-dimensional code 2 is installed as described above, both of the license plate of the parked vehicle and the two-dimensional code 2 can completely enter an image capturing range of the camera 3. In this way, both of the license plate and the two-dimensional code 2 can collectively be captured in the single image.
In addition, since the image of the vehicle registration number and the two-dimensional code 2 can be captured in the identifiable size, both of the vehicle registration number and the two-dimensional code 2 can be specified on the basis of the single captured image.
Furthermore, since a relative positional relationship between the parking spot and the two-dimensional code 2 can be fixed to a certain extent, an amount of relative displacement between the license plate and the two-dimensional code 2 can be reduced. In this way, a search range of the license plate and the two-dimensional code 2 can be narrowed during an analysis of the image captured by the camera 3, which can realize high-speed processing and a low load of a computer.

As the camera 3, an in-vehicle camera (a front monitoring camera or a rear guide monitoring camera) or a smartphone camera is used. The image captured by the camera 3 may be a still image or a moving image. The image captured by the camera 3 is sent to the management device 4 through a network N. The network N may be any of a wireless communication network, Wireless Fidelity (Wi-Fi), Bluetooth (registered trademark), another type of wireless communication line, a combination of those, and the like, for example.

The management device 4 is constructed of an information processor such as a dedicated or general-purpose server computer. The management device 4 may be constructed of the single information processor or may be constructed of multiple information processors scattered in the network. In addition, the management device 4 is disposed in a management center located remotely from the parking lot.

The management device 4 includes a control section 41, a communication section 42, and a storage section 43, for example. The control section 41 includes a central processing unit (CPU) 41a and memory 41b. The management device 4 realizes various functions, which will be described below, when the CPU 41a executes predetermined programs stored in the memory 41b and the like, for example.

The control section 41 controls operations of various components of the management device 4 and also controls execution of various types of processing. The processing executed by the control section 41 will be described below in detail. The communication section 42 is a communication interface used to communicate with an external device. The storage section 43 is constructed of a storage device such as a hard disk. The storage section 43 stores various programs and various types of information that are required for the execution of the processing in the management device 4.

So far, it has been described that the parking lot management system 100 in this embodiment includes the two-dimensional code 2, the camera 3, and the management device 4. However, the invention is not limited thereto, and the parking lot management system 100 can appropriately include any device when necessary. In addition, a system that is constructed of the two-dimensional code 2, the camera 3, and some of the components provided in the management device 4 can also be comprehended as the parking lot management system 100.

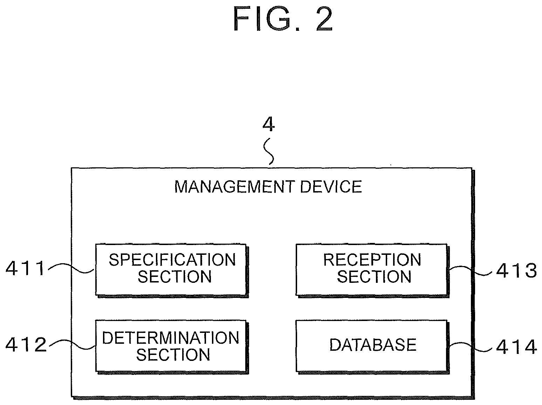

Referring to FIG. 2, a functional configuration of the management device 4 will be described. The management device 4 has a specification section 411, a determination section 412, a reception section 413, and a database 414, for example. Functions of each of the sections will be described below in detail.

The database 414 stores various types of information such as the information that is required for the processing executed in the management device 4 and information generated by the processing. For example, the database 414 stores user information on users who own vehicles, vehicle information on the vehicles, reservation information on reservations of the parking lot, illicit vehicle information on illicit vehicles, and the like.

The user information includes a user ID, a name, contact information, the vehicle registration number, and the like, for example. The vehicle information includes the vehicle registration number, a vehicle name, a vehicle model, the user ID, and the like, for example. The reservation information includes the user ID, the vehicle registration number, a reservation date and time, the reserved parking lot, the reserved parking spot, and the like, for example. The illicit vehicle information includes the vehicle registration number, illicit parking locations, parked dates and time, the captured images, the number of the illicit parking, and the like, for example.

In this embodiment, the user information, the vehicle information, the reservation information, and the illicit vehicle information, each of which includes the vehicle registration number, will collectively be referred to as vehicle registration number information.

The reception section 413 receives the image captured by the camera 3.

The specification section 411 specifies the vehicle registration number and the parking location on the basis of the image captured by the camera 3. The specification of the vehicle registration number and the parking location by the specification section 411 will specifically be described below.

First, the specification section 411 analyzes the image captured by the camera 3 and specifies image areas that include the two-dimensional code 2 and the license plate. Next, the specification section 411 reads identification information (for example, the location information) of the parking spot from the specified image area of the two-dimensional code 2, so as to specify the parking location. In addition, the specification section 411 specifies the vehicle registration number from the specified image area of the license plate.

The determination section 412 refers to the vehicle registration number information, which is stored in the database 414, on the basis of the parking location and the vehicle registration number specified by the specification section 411, and determines whether the vehicle is parked illicitly.

Hereinafter, a description on a determination procedure of the illicit parking will be divided into (A) a case where the camera 3 is the camera installed in the smartphone and (B) a case where the camera 3 is the in-vehicle camera, and both of the cases will sequentially be described. Here, a case where the Chameleon Code (registered trademark, hereinafter referred to as a "C code") is used as the two-dimensional code 2 will be described. The C code is a two-dimensional code that can stably and promptly be specified regardless of the image capturing direction of the camera.

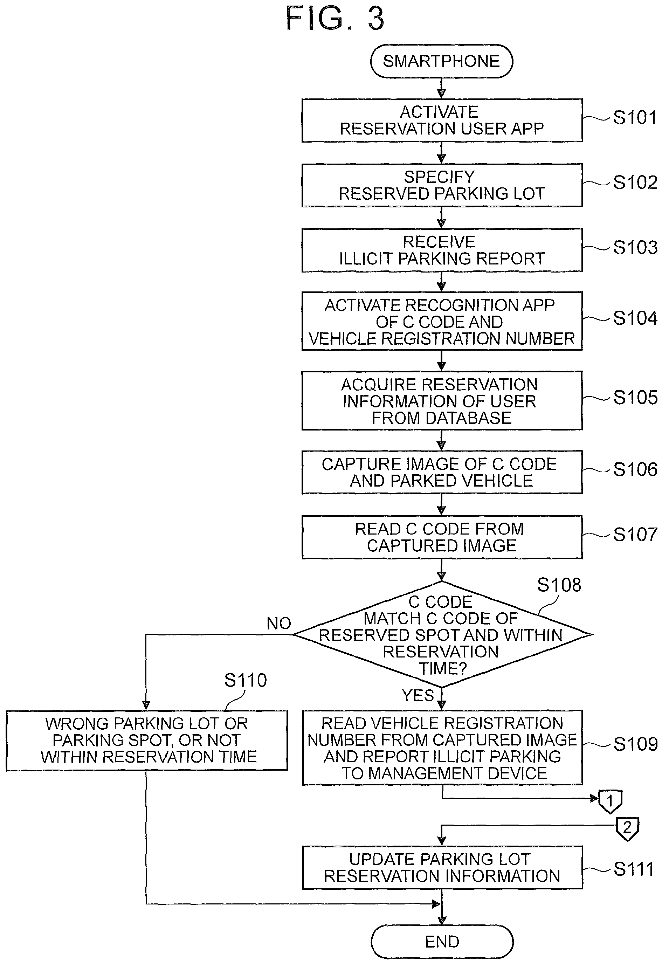

(A) The case where the camera 3 is the camera installed in the smartphone. First, referring to FIG. 3, the procedure on the smartphone side will be described.

First, the smartphone activates a reservation user application (hereinafter referred to as a "reservation user app") in accordance with an activation command operation by the user (step S101).

Next, the smartphone specifies the parking lot that has been reserved by the user in accordance with a parking lot selection operation by the user (step S102).

Next, the user who has moved to the reserved parking lot presses an illicit parking report button that is displayed by the reservation user app in the case where another vehicle is parked in the reserved parking spot. Once this illicit parking report button is pressed by the user, the smartphone receives an illicit parking report (step S103).

Next, the smartphone activates an application that recognizes the C code and the vehicle registration number (step S104).

Next, the smartphone acquires the reservation information of the user from the database 414 in the management device 4 (step S105).

Next, the smartphone captures an image of the C code set for the parking spot and the parked vehicle in accordance with an image capturing operation by the user (step S106).

Next, the smartphone reads the C code from the captured image (step S107).

Next, the smartphone determines whether the C code read in above step S107 matches the C code that corresponds to the parking spot included in the reservation information acquired in above step S105 and whether time at which the C code is read in above step S107 is within the reservation time included in the reservation information acquired in above step S105 (step S108).

If this determination is NO (step S108; NO), the smartphone determines that the user has picked the wrong parking lot or the wrong parking spot or that the current time is not within the reservation time (step S110), displays a message or the like that indicates such a fact, for example, and terminates this procedure.

On the other hand, if it is determined in above step S108 that both of the C codes match each other and that the current time is within the reservation time (step S108; YES), the smartphone determines that the vehicle is parked illicitly, reads the vehicle registration number from the captured image, and reports the illicit parking to the management device 4 (step S109).

Thereafter, the smartphone uses the reservation information on the available parking lot that is sent from the management device 4 so as to update the parking lot reservation information that is managed by the smartphone (step S111). Then, the smartphone terminates this procedure.

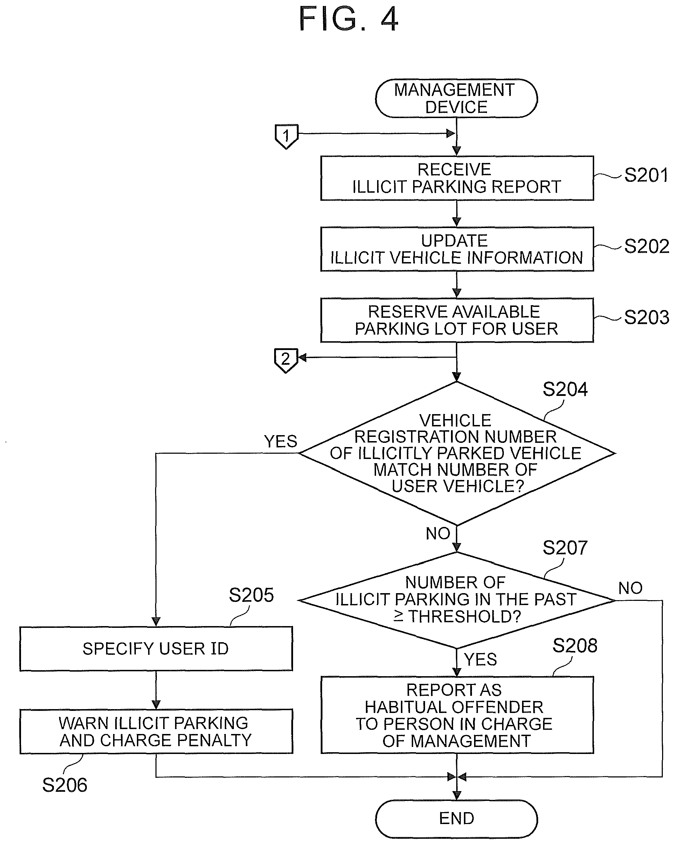

Next, referring to FIG. 4, the procedure on the management device 4 side will be described.

First, the management device 4 receives the illicit parking report that is sent from the smartphone in above step S109 (step S201). The illicit parking report includes various types of the information such as the user ID, a parking lot number, the parking spot number, the vehicle registration number of the illicitly parked vehicle that is read by the camera 3, the image captured by the camera 3, and an image captured date and time.

Next, the management device 4 updates the illicit vehicle information stored in the database 414 on the basis of the illicit parking report received in above step S201 (step S202).

Next, the management device 4 reserves another available parking lot or parking spot for the user (step S203), and sends the reservation information on the reservation of the available parking lot or parking spot to the smartphone.

Next, the management device 4 determines whether the vehicle registration number of the illicitly parked vehicle matches any of the vehicle registration numbers of the vehicles that are owned by the users who have registered for the service, the vehicle registration numbers being managed in the database 414 (step S204). If this determination is YES (step S204; YES), the management device 4 specifies the user ID on the basis of the matched vehicle registration number (step S205), and warns the user who corresponds to this specified user ID of the illicit parking and charges the user with a penalty (step S206).

On the other hand, if it is determined in above step S204 that the vehicle registration number of the illicitly parked vehicle does not match any of the vehicle registration numbers of the vehicles that are owned by the users who have registered for the service (step S204; NO), the management device 4 refers to the illicit vehicle information and determines whether the number of the illicit parking by the illicitly parked vehicle in the past is equal to or higher than a threshold (step S207). If this determination is NO (step S207; NO), this procedure is terminated.

If it is determined in above step S207 that the number of the illicit parking in the past is equal to or higher than the threshold (step S207; YES), the management device 4 reports the information on the illicitly parked vehicle as information on a habitual offender to a person in charge of management (step S208). Then, this procedure is terminated.

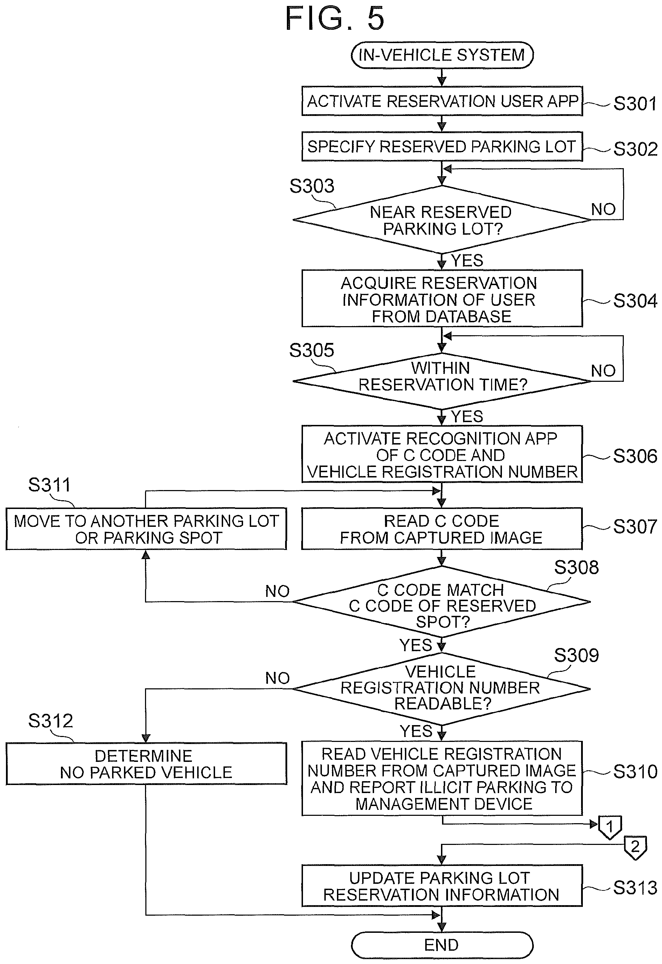

(B) The case where the camera 3 is the in-vehicle camera. Referring to FIG. 5, the procedure on an in-vehicle system side that is installed in the vehicle will be described. Note that the procedure on the management device 4 side is the same as the procedure described in above (A) and shown in FIG. 4 and thus will not be described herein.

First, the in-vehicle system activates the reservation user app in accordance with the activation command operation by the user (step S301).

Next, the in-vehicle system specifies the parking lot that has been reserved by the user in accordance with the parking lot selection operation by the user (step S302).

Next, when the user in the vehicle moves toward the reserved parking lot, the in-vehicle system compares a current location that is measured by a GPS receiver with the location information of the reserved parking lot, and determines whether the vehicle has moved to an area near the reserved parking lot (step S303). If this determination is NO (step S303; NO), the determination processing is repeated until the determination becomes YES.

If it is determined in above step S303 that the vehicle has moved to the area near the reserved parking lot (step S303; YES), the in-vehicle system acquires the reservation information of the user from the database 414 in the management device 4 (step S304).

Next, the in-vehicle system determines whether the current time is within the reservation time that is included in the reservation information acquired in above step S304 (step S305). If this determination is NO (step S305; NO), the determination processing is repeated until the determination becomes YES.

If it is determined in above step S305 that the current time is within the reservation time (step S305; YES), the in-vehicle system activates the application that recognizes the C code and the vehicle registration number (step S306).

Next, the in-vehicle system reads the C code from the image captured by the in-vehicle camera (step S307).

Next, the in-vehicle system determines whether the C code read in above step S307 matches the C code that corresponds to the parking spot included in the reservation information acquired in above step S304 (step S308).

If this determination is NO (step S308; NO), the in-vehicle system outputs a message that indicates such a fact, and the user moves the vehicle to another parking lot or parking spot (step S311). Then, the processing returns to above-described step S307.

If it is determined in above step S308 that both of the C codes match each other (step S308; YES), the in-vehicle system determines whether the vehicle registration number can be read from the image captured by the in-vehicle camera (step S309). If this determination is NO (step S309; NO), the in-vehicle system determines that no parked vehicle exists (step S312) and terminates this procedure.

If it is determined in above step S309 that the vehicle registration number can be read (step S309; YES), the in-vehicle system reads the vehicle registration number from the image captured by the in-vehicle camera and reports the illicit parking to the management device 4 (step S310).

Thereafter, the in-vehicle system uses the reservation information on the available parking lot that is sent from the management device 4 so as to update the parking lot reservation information that is managed by the in-vehicle system (step S313). Then, the in-vehicle system terminates this procedure.

Next, a specific method in which the specification section 411 shown in FIG. 2 specifies the two-dimensional code 2 and then specifies the vehicle registration number will be described in (1) to (8) below. Here, the case where the C code is used as the two-dimensional code 2 will be described.

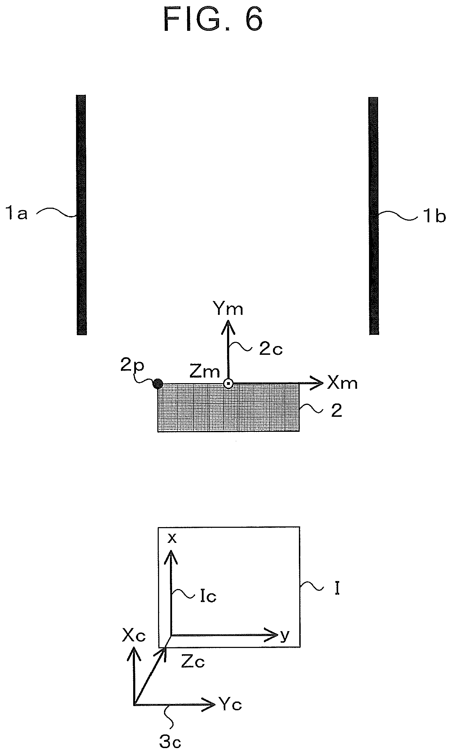

(1) First, coordinate systems that are used in the parking lot management system 100 will be defined. FIG. 6 exemplifies the coordinate systems used in the parking lot management system 100. A coordinate system 3c of the camera 3 has a focus position of the camera 3 as an origin, and a direction perpendicular to an image plane I is defined as a Z-axis (Zc). In addition, in the coordinate system 3c of the camera 3, directions parallel to an X-axis (x) and a Y-axis (y) of the image plane I are respectively defined as an X-axis (Xc) and a Y-axis (Yc).

In a coordinate system 2c of a C code 2, an X-axis is denoted by Xm, a Y-axis is denoted by Ym, and a Z-axis is denoted by Zm. The coordinate system 2c of the C code 2 can be transformed to the coordinate system 3c of the camera 3 when being rotated or moved in parallel. Here, coordinates in the coordinate system 2c of the C code 2 will be described as (Xc, Yc, Zc). The image plane l that is projected by a perspective transformation model is defined as an image coordinate system Ic, and the coordinates in the coordinate system 2c of the C code 2 is projected to coordinates (xc, yc) in this image coordinate system Ic. Note that the Y-axis (Yc) in the coordinate system 3c of the camera 3 may be parallel with a paved surface of the parking lot.

(2) Next, the image coordinate system Ic is used to compute coordinates that correspond to four vertices of the C code 2. More specifically, the coordinates of the four vertices can be computed by extracting edges of the image and detecting straight lines using the known Hough transform.

(3) Next, a three-dimensional position of the C code 2 with respect to the camera 3 is estimated on the basis of the coordinates of the four vertices of the C code 2 computed in above (2). More specifically, the three-dimensional position can be estimated by computing a transformation matrix Tcm from the coordinate system 2c of the C code 2 to the coordinate system 3c of the camera 3. This procedure will be described below.

(3-1) A rotational movement component $R_{3\times3}$ is estimated. (3-2) A parallel movement component $T_{3\times1}$ is estimated. (3-3) The transformation matrix Tcm that includes the rotational movement component $R_{3\times3}$ and the parallel movement component $T_{3\times1}$ is modified.

The procedure of above (3-1) to (3-3) can be realized by using a three-dimensional positional estimation method of a marker that is publicly available as AR Tool Kit, or the like. This method is described in detail in the following literature, for example. Note that, as described in Kato, H., and three other persons. An Augmented Reality System and its Calibration based on Marker Tracking. 2.3 Three-dimensional Positional Estimation of Marker. TVRSJ Vol. 4, No. 4, 1999 [online], [retrieved on 2017-01-27]. Retrieved from the Internet: <URL: http://intron.kz.tsukuba.ac.jp/tvrsj/4.4/kato/p-99_VRSJ4_4.pdf>, an internal parameter of the camera 3 is desirably calculated by calibration in advance.

(4) It is determined whether the camera 3 exists at a position where the vehicle registration number can be recognized. The position where the vehicle registration number can be recognized is a position where an angle defined by an optical axis direction of the camera 3 and a front direction of the parked vehicle is small and where letters and/or numbers on the license plate are readable. A specific method of this determination will be described in (4-1) to (4-2) below.

(4-1) An angle $\theta$ defined by the optical axis direction of the camera 3 and the front direction of the parked vehicle can be calculated from a condition in the following equation 1. An angle defined by the Y-axis (Yc) in the coordinate system 3c of the camera 3 and the X-axis (Xm) in the coordinate system 2c of the C code 2 is $\theta$.

$$-\theta_{th} \leq \theta \leq \theta_{th} \ldots \text{the equation 1}$$

$\theta_{th}$ in the equation 1 is an upper limit of the angle at which the vehicle registration number can be recognized, and is calculated in advance by an experiment or the like. $\theta_{th}$ can be calculated by computing an inner product of i) a unit vector $Xm = (1, 0, 0)^T$ in an X-axis direction of the coordinate system 2c of the C code 2 and ii) a unit vector Yc in a Y-axis direction of the coordinate system 3c of the camera 3 that are seen from the coordinate system 2c of the C code 2, more specifically, by using the following equation 2.

$$Xm \cdot Yc \geq \cos \theta_{th} \ldots \text{the equation 2}$$

Yc in the equation 2 can be calculated by applying $Yc = (0, 1, 0, 0)^T$ to the following equation 201. For example, in (the equation 4) in Kato, H., and three other persons. An Augmented Reality System and its Calibration based on Marker Tracking. 2.3 Three-dimensional Positional Estimation of Marker. TVRSJ Vol. 4, No. 4, 1999 [online], [retrieved on 2017-01-27]. Retrieved from the Internet: <URL: http://intron.kz.tsukuba.ac.jp/tvrsj/4.4/kato/p-99_VRSJ4_4.pdf>, the equation 201 can be computed by multiplying both sides by an inverse matrix of Tcm.

$$\begin{bmatrix} Xm \\ Ym \\ Zm \\ 1 \end{bmatrix} = (Tcm)^{-1} \begin{bmatrix} Xc \\ Yc \\ Zc \\ 1 \end{bmatrix} \ldots \text{the equation 201}$$

(4-2) A condition of a distance between the camera 3 and the license plate ($\approx$ the C code 2) within which the letters and/or numbers on the license plate are readable can be calculated from the following equation 3 by using $|T_{3\times1}|$ that is a distance from the origin in the coordinate system 3c of the camera 3 to an origin in the coordinate system 2c of the C code 2.

$$|T_{3\times1}| \leq l_{th} \ldots \text{the equation 3}$$

$l_{th}$ in the equation 3 is an upper limit of the distance within which the vehicle registration number can be recognized, and is calculated in advance by the experiment or the like.

(5) A driver is guided such that the camera 3 moves to the position where the vehicle registration number can be recognized. Illustratively, the driver is notified of a message, "Move the vehicle until the vehicle approaches the C code and the C code faces the front of the parked vehicle".

(6) Above (3) to (5) are repeated until the vehicle moves to the position where the vehicle registration number can be recognized.

(7) The image captured by the camera 3 is transformed to an image in which the parking spot is seen from the front by projective transformation. A specific transformation procedure will be described in (7-1) to (7-3) below.

(7-1) First, a planar projective transformation matrix in the following equation 202 is used for planar projective transformation of an Xm-Zm plane in the coordinate system 2c of the C code 2 to an x-y plane in the image coordinate system Ic.

$$h\begin{bmatrix} X_c \\ Y_c \\ 1 \end{bmatrix} = \begin{bmatrix} q_{11} & q_{13} & q_{14} \\ q_{21} & q_{23} & q_{24} \\ q_{31} & q_{33} & q_{34} \end{bmatrix} \begin{bmatrix} X_m \\ Z_m \\ 1 \end{bmatrix} \quad \text{... the equation 202}$$

The equation 202 can be calculated by applying 0 to Ym in the following equation 203.

$$\begin{bmatrix} h X_c \\ h Y_c \\ h \\ 1 \end{bmatrix} = P T_{cm} \begin{bmatrix} X_m \\ Y_m \\ Z_m \\ 1 \end{bmatrix} \quad \text{... the equation 203}$$

P in the equation 203 is an internal parameter matrix of the camera 3, is calculated in advance by the calibration, and is known. Tcm is calculated in above (4-1). PTcm is a projective transformation matrix used for the projection from the coordinate system 2c of the C code 2 to the image coordinate system Ic. The equation 203 can be acquired from (Equation 4) and (Equation 5) in above Kato, H., and three other persons. An Augmented Reality System and its Calibration based on Marker Tracking. 2.3 Three-dimensional Positional Estimation of Marker. TVRSJ Vol. 4, No. 4, 1999 [online], [retrieved on 2017-01-27]. Retrieved from the Internet: <URL: http://intron.kz.tsukuba.ac.jp/tvrsj/4.4/kato/p-99_VRSJ4_4.pdf>, for example.

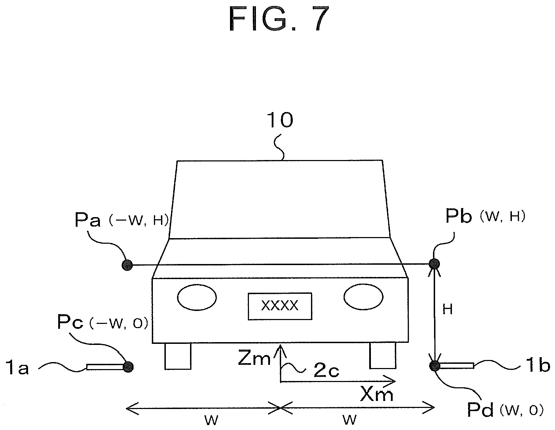

(7-2) Next, a range where the license plate possibly exists on the Xm-Zm plane in the coordinate system 2c of the C code 2 is calculated, and a range on the x-y plane in the image coordinate system Ic that corresponds to the above range is set as a processing range. More specifically, as shown in FIG. 7, on the Xm-Zm plane in the coordinate system 2c of the C code 2, four points Pa (-W, H), Pb (W, H), Pc (-W, 0), and Pd (W, 0) that are defined by 2W as width of the parking spot (length between the boundary line 1a and the boundary line 1b) and H as an upper limit value of height of the license plate are projected onto the x-y plane in the image coordinate system Ic by the equation 202. Then, an area within a rectangle that is defined by these projected four points is set as the processing range.

(7-3) Next, points that exist in the processing range on the x-y plane in the image coordinate system Ic are inversely projected onto the Xm-Zm plane in the coordinate system 2c of the C code 2 by inverse transformation of the equation 202. In this way, an image that resembles the image in which the parking spot is seen from the front can be acquired, and even in the case where the vehicle is parked in parallel in the parking spot, the image in which the vehicle is seen from the front can be acquired.

(8) A known logic to recognize the vehicle registration number is applied to the image that has been transformed in above (7), so as to recognize the vehicle registration number.

As it has been described above, according to the parking lot management system 100 in the embodiment, the two-dimensional code 2 that corresponds to the parking spot can be provided in the parking lot. The two-dimensional code 2 can be installed to exist within the predetermined range from the license plate of the vehicle when the vehicle is parked in the parking spot. The predetermined range can be set as such a range that, when the camera 3 captures the identification code in the state where the vehicle is parked in the parking spot, the captured image includes the image of the license plate and the range where the camera 3 can capture the image in such size that the vehicle registration number and the two-dimensional code 2 are identifiable on the basis of the captured image.

In this way, both of the license plate of the parked vehicle and the two-dimensional code 2 can completely enter the image capturing range of the camera 3 without overlapping each other. Thus, both of the license plate and the two-dimensional code 2 can collectively be captured in the single image. Furthermore, both of the vehicle registration number and the two-dimensional code 2 can be specified on the basis of the single image.

Therefore, according to the parking lot management system 100 in the embodiment, objective evidence of the illicit parking can easily be acquired.

In addition, according to the parking lot management system 100 in the embodiment described above, the parking location and the vehicle registration number can be specified on the basis of the image captured by the camera 3, and the specified parking location and the specified vehicle registration number can be stored in connection with each other as the vehicle registration number information. Furthermore, it can be determined whether the vehicle is parked illicitly on the basis of the specified parking location and the specified vehicle registration number by referring to the already-stored vehicle registration number information.

In this way, it is possible to warn the driver of the vehicle that is parked illicitly, charge the driver with the penalty, and report to the person in charge of management.

[Modified Example] The embodiment that has been described so far is merely provided to facilitate understanding of the invention, and thus is not provided to limit interpretation of the invention. Each of the elements included in the embodiment as well as arrangement, a material, a condition, a shape, size, and the like thereof is not limited to what has been exemplified above and can appropriately be changed.

In the above-described embodiment, the two-dimensional code 2 with unique content is allocated to each of the parking spots. However, the invention is not limited thereto. For example, in the case where it is only required to determine the parking lot by using the two-dimensional code 2, the two-dimensional code 2 that has the same content for the single parking lot may be allocated to each of the parking spots in the parking lot.

**Claims**

1. A parking lot comprising:

   a parking spot; and
   an identification code that corresponds to the parking spot, wherein
   the identification code is installed to exist within a predetermined range,
   the predetermined range being such a range that, when a camera (3) captures an image of the identification code, the image captured by the camera (3) can include an image of a license plate of a vehicle parked in the parking spot, and
   the predetermined range being a range where the camera (3) can capture the image in such size that a vehicle registration number and the identification code are identifiable based on the image captured by the camera (3).

2. A parking lot management system comprising:

   an identification code corresponding to a parking spot; and
   a specification section (411) configured to specify a vehicle registration number of the vehicle and the parking spot where the vehicle is parked based on an image, the image including a license plate of the vehicle and the identification code, the vehicle being parked in the parking spot.

3. The parking lot management system according to claim 2, wherein
   the identification code is installed to exist within a predetermined range,

   the predetermined range being such a range that, when a camera (3) captures an image of the identification code, the image captured by the camera (3) can include an image of the license plate of the vehicle, and
   the predetermined range being a range where the camera (3) can capture the image in such size that the vehicle registration number and the identification code are identifiable based on the image captured by the camera (3).

4. The parking lot management system according to claim 2, further comprising
   a storage section configured to store the vehicle registration number in association with the parking spot.

5. The parking lot management system according to claim 4, further comprising
   a camera (3) configured to capture the image.

**6.** The parking lot management system according to claim 4, further comprising
a reception section (413) configured to receive the image captured by a camera (3).

**7.** The parking lot management system according to claim 2, further comprising:

a storage section configured to store vehicle registration number information including the vehicle registration number; and
a determination section (412) configured to

refer the vehicle registration number information stored in the storage section and
determine whether the vehicle is parked illicitly based on the vehicle registration number and the parking spot.

**8.** The parking lot management system according to claim 7, further comprising
a camera (3) configured to capture the image.

**9.** The parking lot management system according to claim 7, further comprising
a reception section (413) configured to receive the image captured by a camera (3).

**10.** The parking lot management system according to claim 2, further comprising:

a camera (3) configured to capture the image; and
a storage section configured to store the vehicle registration number in association with the parking spot, wherein
the identification code is installed to exist within a predetermined range,
the predetermined range is such a range that, when the camera (3) captures an image of the identification code, the image captured by the camera (3) can include an image of the license plate of the vehicle, and
the predetermined range is a range where the camera (3) can capture the image in such size that the vehicle registration number and the identification code are identifiable based on the image captured by the camera (3).

**11.** The parking lot management system according to claim 2, further comprising:

a reception section (413) configured to receive the image captured by a camera (3); and
a storage section configured to store the vehicle registration number in association with the parking spot, wherein
the identification code is installed to exist within a predetermined range,
the predetermined range is such a range that, when the camera (3) captures an image of the identification code, the image captured by the camera (3) can include an image of the license plate of the vehicle, and
the predetermined range is a range where the camera (3) can capture the image in such size that the vehicle registration number and the identification code are identifiable based on the image captured by the camera (3).

**12.** The parking lot management system according to claim 2, further comprising:

a camera (3) configured to capture the image;
a storage section configured to store vehicle registration number information including the vehicle registration number; and
a determination section (412) configured to

refer to the vehicle registration number information stored in the storage section and
determine whether the vehicle is parked illicitly based on the vehicle registration number and the parking spot,

wherein
the identification code is installed to exist within a predetermined range,
the predetermined range being such a range that, when the camera (3) captures an image of the identification code, the image captured by the camera (3) can include an image of the license plate of the vehicle, and
the predetermined range being a range where the camera (3) can capture the image in such size that the vehicle registration number and the identification code are identifiable based on the image captured by the camera (3).

**13.** The parking lot management system according to claim 2, further comprising:

a reception section (413) configured to receive the image captured by a camera (3);
a storage section configured to store vehicle registration number information including the vehicle registration number; and
a determination section (412) configured to

refer to the vehicle registration number information stored in the storage section and
determine whether the vehicle is parked illicitly based on the vehicle registration number and the parking spot,

wherein
the identification code is installed to exist within a predetermined range,
the predetermined range is such a range that, when the camera (3) captures an image of the identification code, the image captured by the camera (3) can include an image of the license plate of the vehicle, and
the predetermined range is a range where the camera (3) can capture the image in such size that the vehicle registration number and the identification code are identifiable based on the image captured by the camera (3).

14. A parking lot management method which is performed in a parking lot management system including a camera (3) and an identification code corresponding to a parking spot, the parking lot management method comprising:

specifying a vehicle registration number and a parking spot based on an image captured by the camera (3), the image including the identification code and a license plate; and
storing the vehicle registration number and the parking spot in association with each other, wherein
the identification code is installed to exist within a predetermined range,
the predetermined range is such a range that, when the camera (3) captures an image of the identification code, the image captured by the camera (3) can include an image of the license plate of the vehicle parked in the parking spot, and
the predetermined range is a range where the camera (3) can capture the image in such size that the vehicle registration number and the identification code are identifiable based on the image captured by the camera (3).

# FIG. 1

<u>100</u>

1a

1b

Y

X

2p

2a

2b

2

CAMERA 3

N

MANAGEMENT DEVICE 4

41 CONTROL SECTION

41a CPU

41b MEMORY

COMMUNICATION SECTION 42

STORAGE SECTION 43

# FIG. 2

4

MANAGEMENT DEVICE

411 — SPECIFICATION SECTION

413 — RECEPTION SECTION

412 — DETERMINATION SECTION

414 — DATABASE

# FIG. 3

SMARTPHONE

ACTIVATE
RESERVATION USER APP — S101

SPECIFY
RESERVED PARKING LOT — S102

RECEIVE
ILLICIT PARKING REPORT — S103

ACTIVATE RECOGNITION APP
OF C CODE AND
VEHICLE REGISTRATION NUMBER — S104

ACQUIRE RESERVATION
INFORMATION OF USER
FROM DATABASE — S105

CAPTURE IMAGE OF C CODE
AND PARKED VEHICLE — S106

READ C CODE FROM
CAPTURED IMAGE — S107

S108
C CODE
MATCH C CODE OF
RESERVED SPOT AND WITHIN
RESERVATION
TIME?

NO

S110

WRONG PARKING LOT OR
PARKING SPOT, OR NOT
WITHIN RESERVATION TIME

YES

READ VEHICLE REGISTRATION
NUMBER FROM CAPTURED IMAGE
AND REPORT ILLICIT PARKING
TO MANAGEMENT DEVICE — S109

①

②

UPDATE PARKING LOT
RESERVATION INFORMATION — S111

END

# FIG. 4

```
        ┌─────────────────────┐
        │     MANAGEMENT      │
        │       DEVICE        │
        └─────────────────────┘
   ①───────────────────────┐
                            ▼
        ┌─────────────────────────────┐
        │          RECEIVE            │──S201
        │   ILLICIT PARKING REPORT    │
        └─────────────────────────────┘
                            ▼
        ┌─────────────────────────────┐
        │           UPDATE            │──S202
        │  ILLICIT VEHICLE INFORMATION│
        └─────────────────────────────┘
                            ▼
        ┌─────────────────────────────┐
        │      RESERVE AVAILABLE      │──S203
        │     PARKING LOT FOR USER    │
        └─────────────────────────────┘
   ②◄───────────────────────┐
                            ▼
                                         S204
                    VEHICLE
            REGISTRATION NUMBER
YES      OF ILLICITLY PARKED VEHICLE
            MATCH NUMBER OF
              USER VEHICLE?

                    NO
                                      S207
                                              NO
               NUMBER OF
         ILLICIT PARKING IN THE PAST
            ≥ THRESHOLD?
  S205
                            YES        S208

┌──────────────────────┐    ┌─────────────────────────┐
│   SPECIFY USER ID     │    │      REPORT AS          │
└──────────────────────┘    │  HABITUAL OFFENDER      │
                            │ TO PERSON IN CHARGE     │
┌──────────────────────┐    │   OF MANAGEMENT         │
│ WARN ILLICIT PARKING │    └─────────────────────────┘
│  AND CHARGE PENALTY  │
└──────────────────────┘
   S206
                            ┌─────────────┐
                            │     END     │
                            └─────────────┘
```

# FIG. 5

```
        ( IN-VEHICLE SYSTEM )
                 │
                 ▼
┌──────────────────────────────────┐
│  ACTIVATE RESERVATION USER APP   │──── S301
└──────────────────────────────────┘
                 │
                 ▼
┌──────────────────────────────────┐
│  SPECIFY RESERVED PARKING LOT    │──── S302
└──────────────────────────────────┘
                 │◄──────────────────────┐
                 ▼                        │
S303        ╱  NEAR RESERVED  ╲    NO     │
         ◄─╱   PARKING LOT?    ╲──────────┘
            ╲                  ╱
             ╲                ╱
              │ YES
              ▼
┌──────────────────────────────────┐
│  ACQUIRE RESERVATION             │
│  INFORMATION OF USER             │──── S304
│  FROM DATABASE                   │
└──────────────────────────────────┘
                 │◄──────────────────────┐
                 ▼                        │
S305        ╱   WITHIN        ╲    NO     │
         ◄─╱ RESERVATION TIME? ╲──────────┘
            ╲                  ╱
              │ YES
              ▼
┌──────────────────────────────────┐
│  ACTIVATE RECOGNITION APP        │
│  OF C CODE AND                   │──── S306
│  VEHICLE REGISTRATION NUMBER     │
└──────────────────────────────────┘
                 │
S311             ▼
┌────────────────────────┐   ┌──────────────────────────┐
│ MOVE TO ANOTHER        │   │   READ C CODE            │──── S307
│ PARKING LOT            │   │   FROM CAPTURED IMAGE    │
│ OR PARKING SPOT        │   └──────────────────────────┘
└────────────────────────┘                │
         ▲                                 ▼
         │         NO        ╱  C CODE MATCH  ╲  S308
         └──────────────────╱ C CODE OF RESERVED╲
                             ╲     SPOT?        ╱
                              ╲               ╱
                                 │ YES
                                 ▼
              NO        ╱   VEHICLE          ╲  S309
         ┌────────────╱ REGISTRATION NUMBER  ╲
         │            ╲     READABLE?        ╱
         │             ╲                    ╱
S312     ▼                  │ YES
┌──────────────────┐   ┌──────────────────────────────┐
│   DETERMINE      │   │ READ VEHICLE REGISTRATION    │
│ NO PARKED VEHICLE│   │ NUMBER FROM CAPTURED IMAGE   │──── S310
└──────────────────┘   │ AND REPORT ILLICIT PARKING TO│
         │             │ MANAGEMENT DEVICE            │
         │             └──────────────────────────────┘
         │                        │──────────────► ⟨1⟩
         │                        │──────────────► ⟨2⟩
         │                        ▼
         │             ┌──────────────────────────────┐
         │             │  UPDATE PARKING LOT          │──── S313
         │             │  RESERVATION INFORMATION     │
         │             └──────────────────────────────┘
         │                        │
         └────────────────────────┤
                                  ▼
                           (    END    )
```

# FIG. 6

# FIG. 7

**Europäisches Patentamt**
**European Patent Office**
**Office européen des brevets**

# EUROPEAN SEARCH REPORT

Application Number

EP 18 16 5499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/007983 A1 (WELCH FRASER JOHN [AU]) 12 January 2012 (2012-01-12) * paragraphs [0024], [0026] - [0031], [0037] - [0040], [0044], [0058] - [0060], [0067], [0068], [0080], [0083]; figure 1 *<br>----- | 1-14 | INV.<br>G08G1/14<br>G08G1/04<br>G07B15/06 |

TECHNICAL FIELDS
SEARCHED (IPC)

G08G
G07B

The present search report has been drawn up for all claims

| Place of search | Date of completion of the search | Examiner |
|---|---|---|
| The Hague | 29 August 2018 | Fagundes-Peters, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 5499

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2018

| Patent document cited in search report | Publication date | Patent family member(s) | Publication date |
|---|---|---|---|
| US 2012007983 A1 | 12-01-2012 | AU 2009329831 A1<br>AU 2016201902 A1<br>CA 2748333 A1<br>EP 2380143 A1<br>US 2012007983 A1<br>WO 2010071942 A1 | 21-07-2011<br>21-04-2016<br>01-07-2010<br>26-10-2011<br>12-01-2012<br>01-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004234429 A

- JP 2010108240 A

**Non-patent literature cited in the description**

- **KATO, H.** An Augmented Reality System and its Calibration based on Marker Tracking. 2.3 Three-dimensional Positional Estimation of Marker. *TVRSJ,* 1999, vol. 4 (4

- **KATO, H.** An Augmented Reality System and its Calibration based on Marker Tracking. 2.3 Three-dimensional Positional Estimation of Marker. *TVRSJ,* 1999, vol. 4 (4, http://intron.kz.tsukuba.ac.jp/tvrsj/4.4/kato/p-99_VRSJ4_4.pdf>